# EUROPÄISCHE PATENTSCHRIFT

(11) **EP 0 854 597 B1**
(45) Veröffentlichungstag und Bekanntmachung des Hinweises auf die Patenterteilung: **16.03.2005**
(21) Anmeldenummer: 98440007.7
(22) Anmeldetag: 20.01.1998
(51) Int. Cl.: H04B 10/207

(54) **System zur optischen Übertragung von Informationen über mehrere optische Übertragungsleitungen**
System of optical information transmission over plural optical transmission lines
Système de transmission d'informations optiques via plusieurs lignes de transmission optique

(30) Priorität: 21.01.1997 DE 19701888
(43) Veröffentlichungstag der Anmeldung: 22.07.1998
(73) Patentinhaber: ALCATEL, 75008 Paris (FR)
(72) Erfinder: Szechenyi, Kalman, 71579 Spiegelberg (DE); Schaffert, Albrecht, 70839 Gerlingen (DE)
(74) Vertreter: Schätzle, Albin, Dipl.-Phys.

(56) Entgegenhaltungen:
- EP-A- 0 703 681
- HILL A M: "AN EXPERIMENTAL BROADBAND AND TELEPHONY PASSIVE OPTICAL NETWORK" , COMMUNICATIONS: CONNECTING THE FUTURE. SAN DIEGO, DEC. 2 - 5, 1990, PROCEEDINGS OF THE GLOBAL TELECOMMUNICATIONS CONFERENCE AND EXHIBITION(GLOBECOM), NEW YORK, IEEE, US, VOL. VOL. 3, PAGE(S) 1856-1860 XP000218890 ISBN: 0-87942-632-2 * Seite 1857, linke Spalte, Zeile 1 - Seite 1858, linke Spalte, Zeile 19 * * Abbildung 2 *
- SPEIDEL J ET AL: "NEW FIBRE NETWORK IN THE LOCAL LOOP FOR TELECOMMUNICATION AND TV DISTRIBUTION SERVICES" PHILIPS TELECOMMUNICATION REVIEW, PHILIPS TELECOMMUNICATIE INDUSTRIE N.V. HILVERSUM, NL, Bd. 49, Nr. 4, 1. Dezember 1991 (1991-12-01), Seiten 21-28, XP000278830

## Beschreibung

Die Erfindung betrifft ein System zur optischen Übertragung von Informationen gemäß dem Oberbegriff des Patentanspruchs 1.

Aus WO 95/05041 ist ein System zur optischen Übertragung von Informationen von einer Unterzentrale über mehrere optische Übertragungsleitungen zu mehreren optischen Netzabschlußeinheiten bekannt. Die Unterzentrale ist über ein passives optisches Verteilnetz aus optischen Übertragungsleitungen und einem optischen Splitter mit den optischen Netzabschlußeinheiten verbunden. In der Unterzentrale werden mehrere elektrische Unterträgersignale zu einem Frequenzmultiplexsignal zusammengefaßt und anschließend elektrisch/optisch umgesetzt. Die Unterträgersignale sind beispielsweise Fernsehsignale, die für alle optischen Netzabschlußeinheiten bestimmt sind und Fernsprechsignale, die jeweils nur für eine optische Netzabschlußeinheit bestimmt sind. Für die Fernsprechsignale ist im Gegensatz zu den Fernsehsignalen lediglich ein kleiner Frequenzbereich reserviert. Sind eine Vielzahl von Endstellen über die optischen Netzabschlußeinheiten mit der Unterzentrale verbunden, so reicht dieser releativ kleine Frequenzbereich nicht aus, um eine genügend große Anzahl von Kanälen für die Vielzahl der Endstellen zur Verfügung zu stellen.

Aus EP 0 703 681 A2 ist ein System zur optischen Übertragung von Informationen von einer Unterzentrale über mehrere optische Übertragungsleitungen zu mehreren optischen Netzabschlußeinheiten bekannt, wobei das System mehrere Knoten zur optischen Übertragung von weiteren Informationen und mehrere optische Koppler beinhaltet, und wobei die weiteren Informationen eines jeden Knotens jeweils über einen Koppler in eine Übertragungsleitung eingespeist werden, die nur mit einem Teil der mehreren optischen Netzabschlußeinheiten verbunden ist.

Es ist deshalb eine Aufgabe der Erfindung ein System zur optischen Übertragung von Informationen zur Verfügung zu stellen, das flexibler unterschiedliche Informationen zu mehreren optischen Netzabschlußeinheiten übertragen kann.

Diese Aufgabe wird durch die Lehre des Patentanspruchs 1 gelöst. Die Erfindung ist insbesondere dadurch gekennzeichnet, daß das System mehrere Knoten zur optischen Übertragung von weiteren Informationen und mehrere optische Koppler beinhaltet, und daß die weiteren Informationen eines jeden Knotens jeweils über einen Koppler in eine Übertragungsleitung eingespeist werden, die nur mit einem Teil der mehreren optischen Netzabschlußeinheiten verbunden ist. Die Zusammenfassung der Informationen, die beispielsweise Fernsehsignale sind, und der weiteren Informationen, die beispielsweise Fernsprechsignale sind, auf optischem Wege über die optischen Koppler und die Aufteilung der weiteren Informationen auf diejenigen Übertragungsleitungen, die jeweils mit der optischen Netzabschlußeinheit verbunden ist, für die die entsprechenden weiteren Informationen ausschließlich bestimmt sind, optimiert die Ausnutzung der verfügbaren Übertragungskapazität. Ferner wird die Ausbaufähigkeit des Systems unterstützt, da für jede weitere optische Netzabschlußeinheit z.B. lediglich eine zusätzliche optische Übertragungsleitung und ein optischer Splitter benötigt werden.

Vorteilhafte Ausgestaltungen sind den abhängigen Patentansprüchen zu entnehmen.

Im folgenden wird die Erfindung anhand von fünf Ausführungsbeispielen unter Zuhilfenahme der Figuren 1 bis 8 erläutert. Es zeigen :
- Fig. 1: eine schematische Darstellung eines ersten erfindungsgemäßen Systems zur optischen Übertragung von Informationen,
- Fig. 2: eine schematische Darstellung eines zweiten erfindungsgemäßen Systems zur optischen Übertragung von Informationen,
- Fig. 3: eine schematische Darstellung eines dritten erfindungsgemäßen Systems zur optischen Übertragung von Informationen, und
- Fig. 4: ein schematisch dargestellter Aufbau eines Ausschnittes der optischen Netzabschlußeinheit aus Fig. 3.

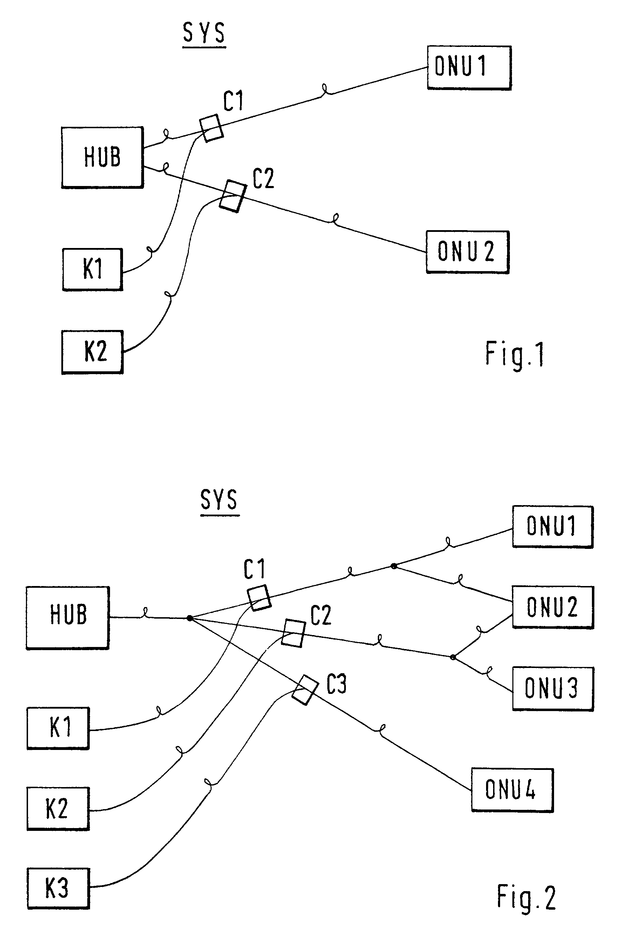

Das erste Ausführungsbeispiel wird nun unter Zuhilfenahme der Fig. 1 erläutert. Fig. 1 zeigt ein erfindungsgemäßes System SYS zur optischen Übertragung von Informationen. Das System SYS beinhaltet eine Unterzentrale HUB, die über eine erste optische Übertragungsleitung mit einer optischen Netzabschlußeinheit ONU1 und über eine zweite optische Übertragungsleitung mit einer optischen Netzabschlußeinheit ONU2 verbunden ist. Von der Unterzentrale wird eine erste Information zur optischen Netzabschlußeinheit ONU1 und eine zweite Information zur optischen Netzabschlußeinheit ONU2 übertragen. Die erste und die zweite Information können identisch sein, z.B. im Falle eines Verteildienstes, wie dem Verteilen von Fernsehsignalen, oder unterschiedlich, z.B. im Falle einer Datenübertragung.

Das System SYS beinhaltet ferner zwei Knoten K1, K2 zur optischen Übertragung von weiteren Informationen. Die weiteren Informationen des Knotens K1, z.B. Fernsprechsignale oder Datensignale, sind ausschließlich für die optische Netzabschlußeinheit ONU1 bestimmt und nicht für die optische Netzabschlußeinheit ONU2. Aus diesem Grund werden die weiteren Informationen des Knotens K1 über eine weitere Übertragungsleitung und einen optischen Koppler C1, der in die erste Übertragungsleitung eingeschleift ist, über einen Teil der ersten Übertragungsleitung zusammen mit den Informationen der Unterzentrale HUB zur optischen Netzabschlußeinheit ONU1 übertragen.

Die weiteren Informationen des Knotens K2, z.B. Fernsprechsignale oder Datensignale, sind ausschließlich für die optische Netzabschlußeinheit ONU2 bestimmt und nicht für die optische Netzabschlußeinheit ONU1. Aus diesem Grund werden die weiteren Informationen des Knotens K2 über eine weitere Übertragungsleitung und einen optischen Koppler C2, der in die zweite Übertragungsleitung eingeschleift ist, über einen Teil der zweiten Übertragungsleitung zusammen mit den Informationen der Unterzentrale HUB zur optischen Netzabschlußeinheit ONU2 übertragen.

Die weiteren Informationen der Knoten K1 und K2 werden somit auf optischem Weg mit den Informationen der Unterzentrale HUB zusammengefaßt und den optischen Netzabschlußeinheiten ONU 1 und ONU2 zugeführt, die beispielsweise jeweils mit einer Gruppe von Endstellen verbunden sind. Auf diese Weise können Gruppen von Endstellen sowohl Verteilinformationen als auch spezielle, ausschließlich für eine jeweilige Gruppe von Endstellen bestimmte Informationen kostengünstig und unter optimaler Ausnutzung der vorhandenen Übertragungskapazität zugeführt werden.

Das zweite Ausführungsbeispiel wird nun weiter unter Zuhilfenahme der Fig. 2 erläutert. Fig. 2 zeigt ein erfindungsgemäßes System SYS zur optischen Übertragung von Informationen. Das System SYS beinhaltet eine Unterzentrale HUB, die über ein passives optisches Übertragungsnetz aus optischen Übertragungsleitungen und drei optischen Splittern mit vier optischen Netzabschlußeinheiten ONU1, ONU2, ONU3, ONU4 verbunden ist. Die optische Netzabschlußeinheit ONU2 ist über zwei unterschiedliche Wege mit der Unterzentrale HUB verbunden. Durch diese Redundanz erhält die optische Netzabschlußeinheit ONU2 die von der Unterzentrale HUB ausgesendeten Informationen doppelt und kann aus ihnen auswählen. Die Einführung von zwei unterschiedlichen Wegen dient u.a. der weiteren Verfügbarkeit einer Verbindung, im Falle eines Ausfalls einer Verbindung.

Das System SYS beinhaltet ferner drei Knoten K1, K2, K3 zur optischen Übertragung von weiteren Informationen, insbesondere von Informationen, die nur für eine oder zwei der vier optischen Netzabschlußeinheiten ONU1, ONU2, ONU3, ONU4 bestimmt sind.

Die weiteren Informationen des Knotens K1 sind für die optischen Netzabschlußeinheiten ONU1 und ONU2 bestimmt. Sie werden über eine zusätzliche optische Übertragungsleitung und einen optischen Koppler C1, der in die optische Übertragungsleitung eingeschleift ist, die über einen optischen Splitter mit den optischen Netzabschlußeinheiten ONU1 und ONU2 verbunden ist, zu den optischen Netzabschlußeinheiten ONU1 und ONU2 übertragen.

Die weiteren Informationen des Knotens K2 sind für die optischen Netzabschlußeinheiten ONU2 und ONU3 bestimmt. Sie werden über eine zusätzliche optische Übertragungsleitung und einen optischen Koppler C2 in die Übertragungsleitung eingespeist, die über einen optischen Splitter mit den optischen Netzabschlußeinheiten ONU2 und ONU3 verbunden ist. Aus diese Weise gelangen die weiteren Informationen des Knotens K2 sowohl zur optischen Netzabschlußeinheit ONU2 als auch zur optischen Netzabschlußeinheit ONU3. Die weiteren Informationen des Knotens K1 und die weiteren Informationen des Knotens K2, die für die optische Netzabschlußeinheit ONU2 bestimmt sind, können dieselben sein, was Redundanz schafft und die weitere Verfügbarkeit einer Verbindung, im Falle eines Ausfalls einer Verbindung bedeutet oder unterschiedliche sein, was zu einer erhöhten Übertragungskapazität führt, beispielsweise die doppelte Übertragungskapazität, verglichen mit den optischen Netzabschlußeinheiten ONU1 und ONU3, Die Aufteilung der verfügbaren Übertragungskanäle auf die optischen Netzabschlußeinheiten ONU1, ONU2 und ONU3 kann auch dynamisch erfolgen, so daß eine an das Verkehrsaufkommen angepaßte Aufteilung während des Betriebs erfolgen kann. Ist die Übertragungskapazität des Knotens K1 beispielsweise 10 Mbit/s so können z.B. 6 Mbit/s für die optischen Netzabschlußeinheit ONU1 genutzt und 4 Mbit/s für die optischen Netzabschlußeinheit ONU2 genutzt werden. Ist die Übertragungskapazität des Knotens K2 beispielsweise auch 10 Mbit/s so können z.B. 6 Mbit/s für die optischen Netzabschlußeinheit ONU3 genutzt und 4 Mbit/s für die optischen Netzabschlußeinheit ONU2 genutzt werden, so daß insgesamt 8 Mbit/s für die optischen Netzabschlußeinheit ONU2 genutzt werden können.

Verändert sich nun das Verkehrsaufkommen, so können über Knoten K1 z.B. 5 Mbit/s für die optischen Netzabschlußeinheit ONU1 und 5 Mbit/s für die optischen Netzabschlußeinheit ONU2 genutzt werden sowie über Knoten K2 z.B. 5 Mbit/s für die optischen Netzabschlußeinheit ONU3 und 5 Mbit/s für die optischen Netzabschlußeinheit ONU2 genutzt werden, so daß insgesamt 10 Mbit/s für die optischen Netzabschlußeinheit ONU2 genutzt werden können.

Die weiteren Informationen des Knotens K3 sind ausschließlich für die optische Netzabschlußeinrichtung ONU4 bestimmt. Sie werden über eine zusätzliche optische Übertragungsleitung und einen optischen Koppler C3 in die Übertragungsleitung eingespeist, die direkt mit der optischen Netzabschlußeinrichtungen ONU4 verbunden ist.

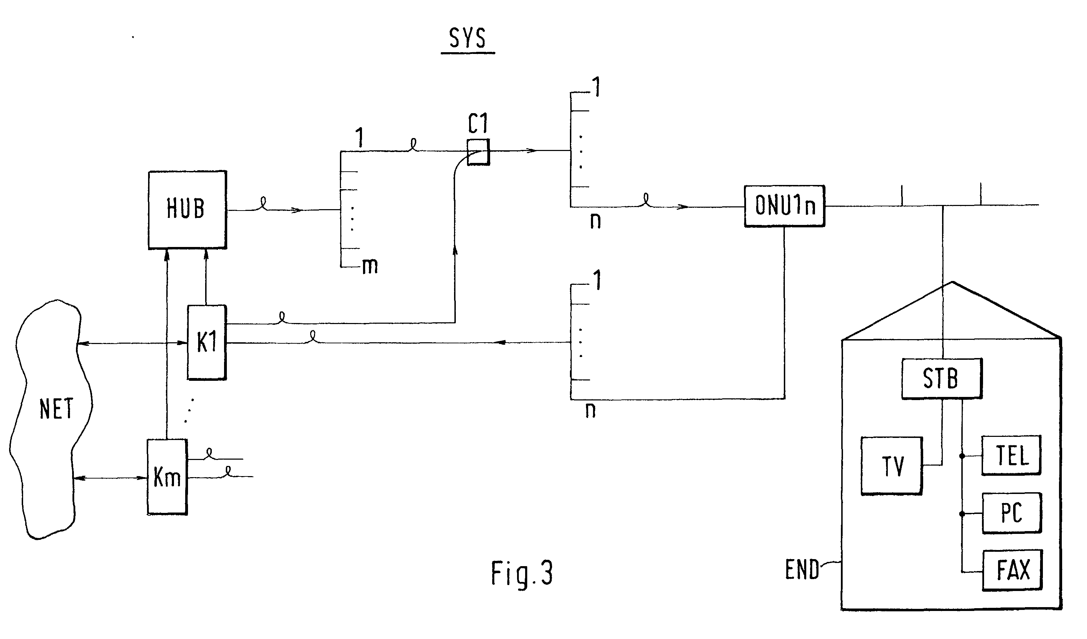

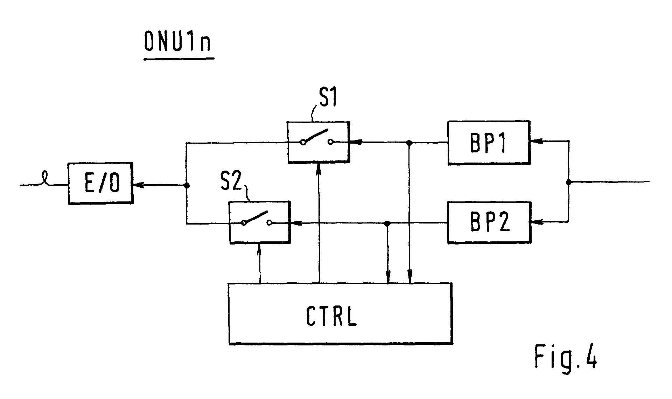

Das dritte Ausführungsbeispiel wird nun weiter unter Zuhilfenahme der Fig. 3 und 4 erläutert. Fig. 3 zeigt ein erfindungsgemäßes System SYS zur optischen Übertragung von Informationen. Das System SYS ist beispielsweise ein hybrides Glasfaser-Koaxialkabel-Zugangssystem, das beispielsweise der Übertragung von analogen und/oder digitalen Fernsehund Videosignalen von einer Unterzentrale HUB zu mehreren Endstellen END sowie der Übertragung von interaktiven Abrufsignalen von mehreren Endstellen END zur Unterzentrale HUB dient. Von den Endstellen END ist beispielhaft eine dargestellt. Das System SYS dient des weiteren der Übertragung von Daten- und/oder Fernsprechsignalen von mehreren Knoten K1, ..., Km zu Gruppen von Endstellen END sowie der Übertragung von Fernsprech- und/oder Datensignalen von Gruppen von Endstellen END zu den Knoten K1, ..., Km.

Die von der Unterzentrale, z.B. einer Kabelfernsehkopfstation, zu übertragenden Signale werden in der Unterzentrale HUB elektrisch/optisch umgesetzt und über ein passives optisches Verteilnetz aus optischen Übertragungsleitungen, z.B. Glasfaserleitungen und optischen Splittern zu mehreren optischen Netzabschlußeinheiten ONU1n, wovon eine dargestellt ist, übertragen. In jeder optischen Netzabschlußeinheit ONU1n findet eine optisch/elektrische Umsetzung der empfangenen Signale statt, die anschließend elektrisch über Koaxialkabel zu einer Gruppe von Endstellen END übertragen werden. Die Videosignale sind beispielsweise von Teilnehmern interaktiv ausgewählte Spielfilme, Lernprogramme oder dergleichen.

Die Endstelle END hat ein eigenes Hausnetz, auf das der Teilnehmer Zugriff hat und an das er zahlreiche Endgeräte anschließen kann. Die Endgeräte sind beispielsweise ein über ein Modem angeschlossener Computer PC, ein über eine Set-Top-Box STB angeschlossenes Fernsehgerät TV, ein Telefon TEL oder ein Faxgerät FAX.

Das passive optische Verteilnetz beinhaltet beispielsweise einen 1:m und m 1:n optische Splitter; m und n sind jeweils natürliche Zahlen, z.B. m=10, n=10. Damit sind 100 optische Netzabschlußeinheiten ONU1n mit der Unterzentrale HUB verbindbar.

Die Knoten K1, ..., Km sind jeweils auf zwei Arten mit den entsprechenden optischen Netzabschlußeinheiten ONU1n verbunden. Der Knoten K1 ist beispielsweise über eine zusätzliche optische Übertragungsleitung und einen optischen Koppler C1, der in die erste Übertragungsleitung nach dem 1:m Splitter eingefügt ist, mit den n optischen Netzabschlußeinheiten ONU1n verbunden, die über einen 1:n Splitter mit dieser ersten optischen Übertragungsleitung verbunden sind. Die weiteren Informationen des Knotens K1, z.B. Fernsprechsignale, erreichen also n optische Netzabschlußeinheiten ONU1n. An jede optische Netzabschlußeinheit ONU1n ist eine Gruppe von Endstellen END angeschlossen. Jede Gruppe beinhaltet beispielsweise 20 Endstellen END, so daß mit dem Knoten K1 200 Endstellen verbunden sind. Knoten K1 stellt z.B. Fernsprech- oder Bildtelefonverbindungen zu diesen Endstellen END her. Die Übertragung von Informationen von den Endstellen END zum Knoten K1 erfolgt über ein zusätzliches passives optisches Verteilnetz, beispielsweise mit einem optischen n:1 Combiner, wie in Fig. 3 dargestellt, oder über n separate Übertragungsleitungen, die jeweils eine optische Netzabschlußeinheit ONU1n direkt mit dem Knoten K1 verbinden. Je nach der verfügbaren Übertragungskapazität im Rückkanalfrequenzbereich und der Anzahl der Endstellen END ist für das zusätzliche passive optische Vertreilnetz auch eine Mischform aus mehreren optischen Combinern und mehreren direkten Verbindungen möglich. Der Zugriff der Endstellen END erfolgt beispielsweise nach dem sog. CDMA-Verfahren; CDMA = Code Division Multiple Access. Die Knoten K2 bis Km sind vergleichbar dem Knoten K1 mit den zugehörigen optischen Netzabschlußeinheiten und den Gruppen von Endstellen END verbunden. Die Übertragung von Informationen erfolgt entsprechend.

Die Knoten K1, ..., Km sind jeweils über eine optische oder eine elektrische Übertragungsleitung mit der Unterzentrale HUB verbunden. Die Knoten K1, ..., Km beinhalten Mittel zur Aufteilung der von den mit ihnen verbundenen optischen Netzabschlußeinheiten ONU1n empfangenen Informationen und Mittel zur Weiterleitung eines Teils der von den optischen Netzabschlußeinheiten ONU empfangenen Informationen zur Unterzentrale HUB. Beispielsweise enthalten die Informationen der optischen Netzabschlußeinheiten ONU1n interaktive Abrufsignale und Fernsprechsignale. Mit dem ersten Mittel werden die Abrufsignale und die Fernsprechsignal voneinander getrennt, z.B. mittels elektrischen Bandpässen nach einer optisch/elektrischen Umsetzung mit einer Photodiode. Mit dem zweiten Mittel werden die Abrufsignale zur Unterzentrale weitergeleitet, z.B. mittels eines Elektrisch/Optisch-Umsetzers.

Die Knoten K1, ..., Km sind z.B. mit einem Fernsprechnetz NET, z.B. einem diensteintegrierenden digitalen Netz, dem sog. ISDN verbunden. Über jeden Knoten K1, ..., Km werden Fernsprechsignale aus dem ISDN zu wenigstens einer Gruppe von Endstellen END und Fernsprechsignale von wenigstens einer Gruppe von Endstellen END ins ISDN übertragen.

Fig. 4 zeigt einen Ausschnitt aus der optischen Netzabschlußeinheit ONU1n aus Fig. 3. Der Ausschnitt zeigt ein Zwischenglied, das bei der Übertragung von Informationen von den Endstellen zu den Knoten eingesetzt wird. Das Zwischenglied dient der Unterdrückung von Störungen und beinhaltet zwei Schalter S1, S2, zwei Bandpaßfilter BP1, BP2, eine Steuereinheit CTRL und einen Elektrisch/Optisch-Umsetzer E/O.

Die zwei Schalter S1, S2 dienen dazu, zumindest ein Teil des Frequenzbereichs der zur Informationsübertragung zu dem jeweiligen Knoten K1, ..., Km dient für die Übertragung freizuschalten oder zu sperren wird. Für den Fall, daß in diesem Teil des Frequenzbereichs keine Übertragung stattfinden soll, wird der Frequenzbereich gesperrt.

Die zwei Bandpaßfilter BP1, BP2, alternativ auch Frequenzweichen oder Bandsperren dienen zur Aufteilung des Frequenzbereichs der zur Informationsübertragung zu dem jeweiligen Knoten K1, ..., Km dient. Das Bandpaßfilter BP1 sperrt z.B. alle Frequenzen, außer diejenigen für die interaktiven Signale. Das Bandpaßfilter BP2 sperrt z.B. alle Frequenzen, außer diejenigen für die Fernsprechsignale.

Die Steuereinheit CTRL dient zur Detektion der Signalpegel in den aufgeteilten Frequenzbereichen und zur Ansteuerung der zwei Schalter S1, S2. Die Steuereinheit CTRL beinhaltet dazu beispielsweise einen Amplitudedetektor, der die Amplituden der interaktiven Abrufsignale und der Fernsprechsignale detektiert und jeweils mit einer oberen und einer unteren Schwelle vergleicht. Die obere Schwelle ist ein maximaler Wert, der nicht überschritten werden darf, da es sonst zu Störungen auf der Übertragungsleitung kommt. Die untere Schwelle ist eine minimale Schwelle, die nicht unterschritten werden darf, da das Signal aufgrund der Dämpfung auf der Übertragungsleitung im Knoten nicht mehr detektierbar ist. Die Ansteuerung der zwei Schalter S1 und S2 erfolgt derart, daß für den Fall, daß der entsprechende Signalpegel unter einer vorgegebenen minimalen Schwelle oder überhalb einer vorgegebenen oberen Schwelle liegt, der entsprechende Frequenzbereich gesperrt wird.

Im Elektrisch/Optisch-Umsetzer E/O, der beispielsweise durch eine direkt modulierte Laserdiode realisiert ist, werden alle Signale, die in den von den Schaltern S1 und S2 freigeschalteten Frequenzbereiche liegen, elektrisch/optisch umgesetzt und anschließend zum entsprechenden Knoten übertragen.

In den drei Ausführungsbeispiele werden Informationen über optische Koppler zusammengefaßt und gemeinsam über eine optische Übertragungsleitung übertragen. Die von der Unterzentrale HUB übertragenen Informationen und die von den mehreren Knoten K1, ..., Km übertragenen weiteren Informationen können bei unterschiedlichen Wellenlängen übertragen werden. Dies hat den Vorteil, daß bei der Zusammenfassung der Informationen die Möglichkeit des Auftretens von Interferenzen reduziert wird. Außerdem steht dadurch sowohl für die Unterzentrale HUB als auch für jeden einzelnen Knoten K1, ..., Km ein größerer Frequenzbereich zur Informationsübertragung zur Verfügung, so daß eine höhere Anzahl von Übertragungskanälen möglich ist.

## Patentansprüche

1. System ( SYS ) zur optischen Übertragung von Informationen von einer Uebertragungsstation ( HUB ) über mehrere optische Übertragungsleitungen zu mehreren optischen Netzabschlußeinheiten ( ONU ),
wobei das System ( SYS ) mehrere Knoten ( K1, ..., Km ) zur optischen Übertragung von weiteren Informationen und mehrere optische Koppler ( C1, C2 ) beinhaltet, und wobei die weiteren Informationen eines jeden Knotens ( K1, ..., Km ) jeweils über einen Koppler ( C1, C2 ) in eine Übertragungsleitung eingespeist werden, die nur mit einem Teil der mehreren optischen Netzabschlußeinheiten ( ONU ) verbunden ist,
**dadurch gekennzeichnet, dass** die mehreren optischen Netzabschlußeinheiten ( ONU ) zur Unterdrückung von Störungen jeweils mindestens einen Schalter (S1, S2 ) beinhalten, mittels dessen zumindest ein Teil des Frequenzbereichs, der zur Informationsübertragung zu dem jeweiligen Knoten ( K1, ..., Km ) dient, für die Übertragung gesperrt wird, für den Fall, daß in diesem Teil des Frequenzbereichs keine Übertragung stattfinden soll.

2. System ( SYS ) nach Anspruch 1 , **dadurch gekennzeichnet, daß** die mehreren optischen Netzabschlußeinheiten ( ONU ) zur Übertragung von Informationen über weitere optische Übertragungsleitungen mit den mehreren Knoten (K1, ..., Km ) verbunden sind.

3. System (SYS) nach Anspruch 2, **dadurch gekennzeichnet, daß** die mehreren Knoten (K1, ..., Km ) mit der Uebertragungsstation ( HUB ) verbunden sind, und daß die mehreren Knoten ( K1, ..., Km ) Mittel zur Aufteilung der von den mehreren optischen Netzabschlußeinheiten ( ONU ) empfangenen Informationen und Mittel zur Weiterleitung eines Teils der von den optischen Netzabschlußeinheiten ( ONU ) empfangenen Informationen zur Uebertragungsstation ( HUB ) beinhalten.

4. System ( SYS ) nach Anspruch 1, **dadurch gekennzeichnet, daß** die Uebertragungsstation ( HUB ) eine Kabelfernsehkopfstation ist, die Informationen Fernsehsignale sind und die Kabelfernsehkopfstation über ein optisches Verteilnetz mit mindestens einem optischen Splitter mit den mehreren optischen Netzabschlußeinheiten ( ONU ) verbunden ist.

5. System ( SYS ) nach Anspruch 4, **dadurch gekennzeichnet, daß** die weiteren Informationen Fernsprechsignale sind, daß die mehreren Knoten (K1, ..., Km ) mit einem Fernsprechnetz ( NET ) und die mehreren optischen Netzabschlußeinheiten ( ONU ) jeweils mit einer Gruppe von Endstellen ( END ) verbindbar sind, und daß über jeden Knoten (K1, ..., Km) Fernsprechsignale zu wenigstens einer Gruppe von Endstellen ( END ) übertragen werden.

6. System ( SYS ) nach den Ansprüchen 3 und 5, **dadurch gekennzeichnet, daß** die von den mehreren optischen Netzabschlußeinheiten ( ONU ) zu übertragenden Informationen interaktive Abrufsignale und Fernsprechsignale sind, und daß die interaktiven Abrufsignale zur Uebertragungsstation ( HUB ) und die Fernsprechsignale zum Fernsprechnetz ( NET ) übertragen werden.

7. System ( SYS ) nach Anspruch 6, **dadurch gekennzeichnet, daß** das die mehreren optischen Netzabschlußeinheiten ( ONU ) jeweils mindestens zwei Mittel ( BP1, BP2 ) zur Aufteilung des Frequenzbereichs, der zur Informationsübertragung zu dem jeweiligen Knoten ( K1, ..., Km ) dient, und eine Steuereinheit ( CTRL ) zur Detektion der Signalpegel in den aufgeteilten Frequenzbereichen und zur Ansteuerung des mindestens einen Schalter (S1, S2) beinhalten, und daß die Ansteuerung des mindestens einen Schalters (S1, S2) derart erfolgt, daß für den Fall, daß der entsprechende Signalpegel unterhalb einer vorgegebenen unteren Schwelle oder überhalb einer vorgegebenen oberen Schwelle liegt, der entsprechende Frequenzbereich gesperrt wird.

8. System ( SYS ) nach Anspruch 1, **dadurch gekennzeichnet, daß** die von der Uebertragungsstation ( HUB ) übertragenen Informationen und die von den mehreren Knoten (K1, ..., Km ) übertragenen weiteren Informationen bei unterschiedlichen Wellenlängen übertragen werden.

## Claims

1. A system (SYS) for optically transmitting information from a transmission station (HUB) over a plurality of optical transmission lines to a plurality of optical network units (ONU), the system (SYS) comprising a plurality of nodes (K1, ..., Km) for optically transmitting further information and a plurality of optical couplers (C1, C2), the further information of each of the nodes (K1, ..., Km) being fed via a respective coupler (C1, C2) into a transmission line connected to only part of the plurality of optical network units (ONU),
**characterized in that** in order to suppress interference, each of the plurality of optical network units (ONU) comprises at least one switch (S1, S2) by means of which at least a subdivision of the frequency band which serves to transmit information to the respective node (K1, ..., Km) is blocked if no transmission is to take place in said subdivision of the frequency band.

2. A system (SYS) as claimed in claim 1, **characterized in that** the plurality of optical network units (ONU) are connected to the plurality of nodes (K1, ..., Km) by further optical transmission lines.

3. A system (SYS) as claimed in claim 2, **characterized in that** the plurality of nodes (K1, ..., Km) are connected to the transmission station (HUB) and comprise means for separating the information received from the plurality of optical network units (ONU) and means for routing part of the information received from the optical network units (ONU) to the transmission station (HUB).

4. A system (SYS) as claimed in claim 1, **characterized in that** the transmission station (HUB) is a cable television head end, that the information consists of television signals, and that the cable television head end is connected to the plurality of optical network units (ONU) via an optical distribution network with at least one optical splitter.

5. A system (SYS) as claimed in claim 4, **characterized in that** the further information consists of telephone signals, that the plurality of nodes (K1, ..., Km) are connectable to a telephone network (NET), that each of the plurality of optical network units (ONU) is connectable to a respective group of customer locations (END), and that through each of the plurality of nodes (K1, ..., Km), telephone signals are transmitted to at least one group of customer locations (END).

6. A system (SYS) as claimed in claims 3 and 5,
**characterized in that** the information to be transmitted by the plurality of optical network units (ONU) consists of interactive request signals and telephone signals, and that the interactive request signals and the telephone signals are transmitted to the transmission station (HUB) and the telephone network (NET), respectively.

7. A system (SYS) as claimed in claim 6, **characterized in that** each of the plurality of optical network units (ONU) comprises at least two means (BP1, BP2) for separating the frequency band used to transmit information to the respective node (K1, ..., Km) and a control unit (CTRL) for detecting the signal levels in the separated frequency bands and for controlling the at least one switch (S1, S2), and that the at least one switch (S1, S2) is controlled in such a way that, if the respective signal level is below a preset lower threshold or above a preset upper threshold, the respective frequency band will be blocked.

8. A system (SYS) as claimed in claim 1, **characterized in that** the information transmitted by the transmission station (HUB) and the further information transmitted by the plurality of nodes (K1, ..., Km) are transmitted at different wavelengths.

## Revendications

1. Système (SYS) pour la transmission optique d'informations d'une station de transmission (HUB) au moyen de plusieurs lignes de transmission optique à plusieurs unités optiques de terminaison de réseau (ONU), le système (SYS) contenant plusieurs noeuds (K1, ..., Km) pour la transmission optique d'autres informations et plusieurs coupleurs (C1, C2), optiques et les autres informations de chaque noeud (K1, ..., Km) étant injectées respectivement au moyen d'un coupleur (C1, C2) dans une ligne de transmission, qui n'est reliée qu'à une partie des plusieurs unités optiques de terminaison de réseau (ONU), **caractérisé en ce que** les plusieurs unités optiques de terminaison de réseau (ONU) pour l'élimination des perturbations contiennent respectivement au moins un interrupteur (S1, S2), au moyen duquel au moins une partie de la plage de fréquences, qui sert à la transmission d'informations au noeud respectif (K1, ..., Km), est bloquée pour la transmission, dans le cas où aucune transmission ne doit avoir lieu dans cette partie de la plage de fréquences.

2. Système (SYS) selon la revendication 1, **caractérisé en ce que** les plusieurs unités optiques de terminaison de réseau (ONU) sont reliées pour la transmission d'informations au moyen d'autres liaisons de transmission optique aux plusieurs noeuds (K1, ..., Km).

3. Système (SYS) selon la revendication 2, **caractérisé en ce que** les plusieurs noeuds (K1, ..., Km) sont reliés à la station de transmission (HUB) et **en ce que** les plusieurs noeuds (K1, ..., Km) contiennent des moyens pour la répartition des informations reçues des plusieurs unités optiques de terminaison de réseau (ONU) et des moyens pour la transmission d'une partie des informations reçues des unités optiques de terminaison de réseau (ONU) à la station de transmission (HUB).

4. Système (SYS) selon la revendication 1, **caractérisé en ce que** la station de transmission (HUB) est une station de tête de télévision par câble, les informations sont des signaux de télévision et la station de tête de télévision par câble est reliée par un réseau de distribution optique à au moins un séparateur optique avec les plusieurs unités optiques de terminaison de réseau (ONU).

5. Système (SYS) selon la revendication 4, **caractérisé en ce que** les autres informations sont des signaux téléphoniques, **en ce que** les plusieurs noeuds (K1, ..., Km) peuvent être liés à un réseau téléphonique (NET) et les plusieurs unités optiques de terminaison de réseau (ONU) peuvent être reliées respectivement à un groupe de stations terminales (END) et **en ce que** des signaux téléphoniques sont transmis par chaque noeud (K1, ..., Km) à au moins un groupe de stations terminales (END).

6. Système (SYS) selon les revendications 3 et 5, **caractérisé en ce que** les informations à transmettre par les plusieurs unités optiques de terminaison de réseau (ONU) sont des signaux d'appel interactifs et des signaux téléphoniques, et **en ce que** les signaux d'appel interactifs sont transmis à la station de transmission (HUB) et les signaux téléphoniques au réseau téléphonique (NET).

7. Système (SYS) selon la revendication 6, **caractérisé en ce que** les plusieurs unités optiques de terminaison de réseau (ONU) contiennent respectivement au moins deux moyens (BP1, BP2) pour la répartition de la plage de fréquences, qui sert à la transmission d'information au noeud respectif (K1,..., Km), et une unité de commande (CTRL) pour la détection des niveaux de signal dans les plages de fréquences réparties et pour l'activation d'au moins un interrupteur (S1, S2), et **en ce que** l'activation du au moins un interrupteur (S1, S2) s'effectue de telle sorte que, dans le cas où le niveau de signal correspondant se situe au-dessous d'un seuil inférieur prédéfini ou au-dessus d'un seuil supérieur prédéfini, la plage de fréquences correspondante est bloquée.

8. Système (SYS) selon la revendication 1, **caractérisé en ce que** les informations transmises par la station de transmission (HUB) et les autres informations transmises par les plusieurs noeuds (K1, ..., Km) sont transmises avec des longueurs d'ondes différentes.
